# EUROPÄISCHE PATENTSCHRIFT

(11) **EP 1 198 159 B1**
(45) Veröffentlichungstag und Bekanntmachung des Hinweises auf die Patenterteilung: **25.02.2004**
(21) Anmeldenummer: 01122119.9
(22) Anmeldetag: 14.09.2001
(51) Int. Cl.: H05B 41/282, H05B 41/36, H05B 41/392

(54) **Abgleichsverfahren für ein nicht-dimmbares elektronisches Vorschaltgerät sowie elektronisches Vorschaltgerät**
Calibration method for a non-dimmable electronic ballast and self-calibrating electronic ballast
Méthode de calibration d' un ballast électronique non réglable en intensité ainsi qu' un ballast électronique auto-calibrant

(30) Priorität: 15.09.2000 DE 10045712
(43) Veröffentlichungstag der Anmeldung: 17.04.2002
(73) Patentinhaber: TridonicAtco GmbH & Co. KG, 6851 Dornbirn (AT)
(72) Erfinder: Zudrell-Koch, Stefan, Dipl.-Ing. (FH), 6850 Dornbirn (AT)
(74) Vertreter: Schmidt-Evers, Jürgen, Dipl.-Ing.

(56) Entgegenhaltungen:
- EP-A- 0 596 740
- WO-A-00/19780
- US-A- 5 623 187

## Beschreibung

Die vorliegende Erfindung betrifft ein elektronisches Abgleichsverfahren für ein nicht-dimmbares elektronisches Vorschaltgerät nach dem Oberbegriff des Anspruchs 1. Außerdem betrifft die Erfindung ein elektronisches Vorschaltgerät zur Durchführung eines solchen Verfahrens nach dem Oberbegriff des Anspruchs 7.

Der Einsatz elektronischer Vorschaltgeräte zum Betreiben von Gasentladungslampen ist gegenüber der Verwendung von konventionellen Vorschaltgeräten mit einem höheren Investitionsaufwand verbunden, führt allerdings aufgrund von reduzierten Vorschaltgeräteverlusten sowie einem verbesserten Lampenwirkungsgrad zu deutlichen Energieeinsparungen. Den Eingang eines elektronischen Vorschaltgeräts bildet üblicherweise ein an das Spannungsversorgungsnetz angeschlossenes Hochfrequenzfilter, welches mit einer Gleichrichterschaltung verbunden ist. Die von der Gleichrichterschaltung gleichgerichtete Versorgungsspannung wird einer Glättungsschaltung zum Erzeugen einer Zwischenkreisspannung zugeführt. Ein mit der Zwischenkreisspannung gespeister Wechselrichter erzeugt schließlich eine hochfrequente Wechselspannung, welche an den Lastkreis mit der darin angeordneten Gasentladungslampe angelegt wird. Das Betreiben mit der hochfrequenten Wechselspannung hat eine Verringerung der Elektrodenverluste sowie eine Steigerung der Lichtausbeute in der positiven Säule der Lampe zur Folge. Durch eine Änderung der Frequenz ist darüber hinaus die Möglichkeit gegeben, die Lampe in unterschiedlichen Helligkeitsstufen zu betreiben.

Die vorliegende Erfindung betrifft jedoch nicht-dimmbare Vorschaltgeräte, bei denen keine Steuerung der Lampenhelligkeit vorgesehen ist. Diese Vorschaltgeräte bieten beim Betreiben der Gasentladungslampen weniger Komfort, so daß dementsprechend erwünscht ist, sie möglichst kostengünstig herzustellen.

Auch wenn an nicht-dimmbare Vorschaltgeräte im Vergleich zu den dimmbaren Vorschaltgeräten relativ geringe Anforderungen gestellt werden, so ist es dennoch erwünscht, daß gewährleistet ist, daß die Geräte für eine bestimmte Lampe alle innerhalb eines bestimmten Leistungsfensters arbeiten. Um diese Anforderung zu erfüllen, wird üblicherweise während des Herstellungsprozesses eingegriffen und ein Abgleich des Vorschaltgeräts durchgeführt. Dieser ist notwendig, da die einzelnen Baukomponenten des Vorschaltgeräts und insbesondere des Lastkreises gewisse Toleranzen aufweisen können, die zu einer Variation der Ausgangsleistung führen können. Der Abgleich wird dadurch ausgeführt, daß die Ausgangsleistung des Gerätes im Betrieb gemessen und die Frequenz des den Wechselrichter ansteuernden Oszillators auf einen geeigneten Wert justiert wird, bei dem die Ausgangsleistung innerhalb des vorgegebenen Leistungsfensters liegt. Ein solcher Abgleich während der Produktion stellt jedoch einen zusätzlichen Herstellungsschritt dar, durch den die Produktionskosten für das Vorschaltgerät wieder erhöht werden.

Aus der US 5,623,187 ist ein Vorschaltgerät für Hochdrucklampen bekannt, mit dem Frequenzen erkannt und vermieden werden können, bei denen akustische Resonanzen auftreten. Die Betriebsfrequenz wird dazu entsprechend adjustiert. Die Frequenzveränderung führt dabei zu einer entsprechenden Änderung der Lampenleistung, die erfasst und durch eine Anpassung der Busspannung kompensiert wird.

In der europäischen Patentanmeldung EP 0 596 740 A1 ist ein Vorschaltgerät für Hochdrucklampen beschrieben, mit dem die Farbtemperatur der Lampe konstant gehalten werden kann. Das Vorschaltgerät weist dabei zwei Regelkreise auf, von denen der erste den Lampenstrom regelt, während mit dem zweiten eine Änderung der Lampenleistung mittels Frequenzveränderung erzielt wird.

Die internationale Anmeldung WO 00 / 19 780 beschreibt ein Abgleichverfahren für ein elektronisches Vorschaltgerät. Das Vorschaltgerät weist dabei einen Transformator auf, dessen Eingangsspannung in Abhängigkeit einer gemessenen Veränderung des Lampenstroms angepasst wird.

Der vorliegenden Erfindung liegt daher die Aufgabe zugrunde, ein nicht-dimmbares elektronisches Vorschaltgerät so zu gestalten, daß dieses innerhalb eines vorgegebenen Leistungsfensters arbeitet, wobei ein Justage-Schritt während der Produktion jedoch entfallen kann.

Die Aufgabe wird durch ein elektronisches Abgleichsverfahren, welches die Merkmale des Anspruchs 1 aufweist bzw. ein elektronisches Vorschaltgerät für mindestens eine Gasentladungslampe, welches die Merkmale des Anspruchs 7 aufweist, gelöst. Das erfindungsgemäße Vorschaltgerät weist zunächst eine an eine Wechselspannungsquelle anschließbare Gleichrichterschaltung sowie eine an den Ausgang der Gleichrichterschaltung angeschlossene Glättungsschaltung zum Erzeugen einer Zwischenkreisspannung auf. Darüber hinaus enthält das Vorschaltgerät einen mit der Zwischenkreisspannung gespeisten Wechselrichter, an dessen Ausgang ein die Lampe enthaltender Lastkreis angeschlossen ist.

Erfindungsgemäß enthält die Glättungsschaltung einen Zwischenkreisspannungs-Regler, der einen Betriebsparameter, der der Ausgangsleistung des Vorschaltgeräts entspricht, erfaßt und die Zwischenkreisspannung in der Abhängigkeit von dem erfaßten Betriebsparameter derart regelt, daß in einem Normalbetriebszustand die Ausgangsleistung des Vorschaltgeräts innerhalb eines vorgegebenen Bereichs liegt. Die Steuerung der Ausgangsleistung des Vorschaltgeräts erfolgt somit erfindungsgemäß durch eine Regelung der den Wechselrichter speisenden Zwischenkreisspannung. Dabei wird der Umstand ausgenützt, daß es sich bei dem Lastkreis mit der darin angeordneten Lampe um ein in erster Näherung lineares zumindest jedoch sich monoton verhaltendes Netzwerk handelt, d.h. daß die der Lampe zugeführte Leistung mit einer steigenden Zwischenkreisspannung ebenfalls ansteigt. Umgekehrt kann durch ein Reduzieren der Zwischenkreisspannung auch die der Lampe zugeführte Leistung herabgesetzt werden.

Hierzu ist zu bemerken, daß es auch bisher bereits bekannt war, die Glättungsschaltungen eines elektronischen Vorschaltgeräts mit einer Regelschaltung zu versehen. Diese Regelschaltung diente jedoch ausschließlich dazu, die Zwischenkreisspannung auf einen vorgegebenen Sollwert einzustellen. Gemäß der vorliegenden Erfindung wird nunmehr jedoch in Abhängigkeit von dem erfaßten Betriebsparameter eine in ihrer Höhe veränderbare Zwischenkreisspannung bereitgestellt, so daß sichergestellt ist, daß die Leistung des Vorschaltgeräts stets in dem vorgeschriebenen Leistungsfenster liegt. Auf diese Weise gelingt es aufgabengemäß den Zwischenschritt der Justage während der Produktion des Vorschaltgeräts entfallen zu lassen. Auch hier besteht dann die Möglichkeit, zum Betreiben des Wechselrichters einen kostengünstigeren Festfrequenzoszillator zu verwenden, so daß die Lampe in dem Normalbetriebszustand mit einer fest vorgegebenen Frequenz betrieben werden kann. Vorzugsweise wird dabei die von dem Wechselrichter vorgegebene Festfrequenz periodisch um einen Mittelwert moduliert, da durch diese Maßnahme die zulässigen Bereiche für die Entstehung von Oberwellen auf besonders effektive Weise eingehalten werden können.

Weiterbildungen der Erfindung sind Gegenstand der Unteransprüche.

So erfolgt die Regelung der Zwischenkreisspannung vorzugsweise mit Hilfe eines die Energieaufnahme des Vorschaltgeräts steuernden Schaltelements, welches von dem Zwischenkreisspannungs-Regler angesteuert wird. Bei dem Schaltelement kann es sich beispielsweise um einen Feldeffekttransistor handeln. Zum Bereitstellen der Zwischenkreisspannung können die gängigen Schaltprinzipien für Glättungsschaltungen verwendet werden. Beispielsweise bietet sich hierfür die Verwendung eines Hochsetzstellers bzw. Aufwärtswandlers an. Das von dem Zwischenkreisspannungs-Regler angesteuerte Schaltelement ist dabei für die Energieaufnahme des Aufwärtswandlers aus dem Netz verantwortlich. In gleicher Weise könnte jedoch auch ein Abwärtswandler oder eine vergleichbare Schaltung verwendet werden.

Der von dem Zwischenkreisspannungs-Regler erfaßte Betriebsparameter ist derart, daß er Auskunft über die aktuell der Gasentladungslampe zugeführte Leistung gibt. Hierbei kann es sich beispielsweise um die Lampenspannung oder den Lampenstrom handeln. Die von dem Zwischenkreisspannungs-Regler erfaßten Daten werden vorzugsweise digital verarbeitet.

Im folgenden soll die Erfindung anhand der beiliegenden Zeichnungen näher erläutert werden. Es zeigen:
- Fig. 1: eine schematische Darstellung des erfindungsgemäßen elektronischen Vorschaltgeräts; und
- Fig. 2: eine nähere Ausgestaltung des Zwischenkreisspannungs-Reglers.

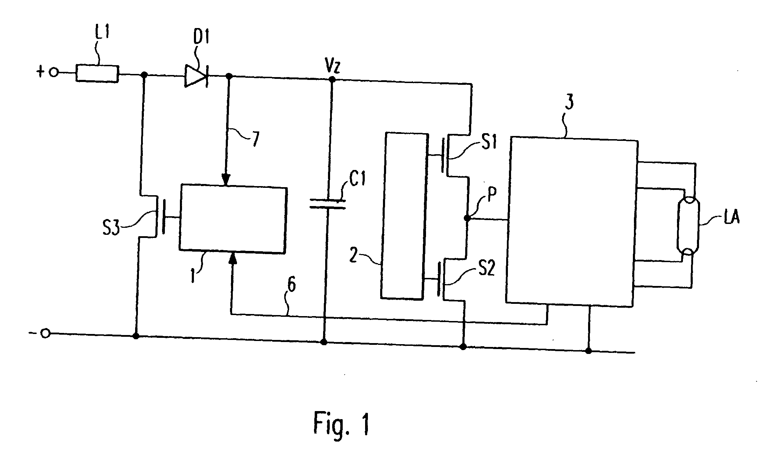

Bei der in Figur 1 gezeigten schematischen Darstellung des erfindungsgemäßen elektronischen Vorschaltgeräts wurde auf die Darstellung der Gleichrichterschaltung, die üblicherweise durch einen Vollbrückengleichrichter gebildet wird, verzichtet. Die gleichgerichtete Netzspannung wird der Glättungsschaltung zugeführt, die im dargestellten Beispiel durch einen Hochsetzsteller gebildet wird, der aus einer Induktivität L1, einer Diode D1, einem Speicherkondensator C1 und einem von dem Zwischenkreisspannungs-Regler 1 gesteuerten Schaltelement in Form eines Feldeffekttransistors S3 besteht.

Die von der Glättungsschaltung bereitgestellte Zwischenkreisspannung Vz wird dem Wechselrichter zugeführt, der aus zwei in einer Halbbrückenschaltung angeordneten Feldeffekttransistoren S1 und S2 besteht. Diese werden von einem Festfrequenzoszillator 2 angesteuert und erzeugen eine hochfrequente Wechselspannung, welche an den Lastkreis 3 mit der Gasentladungslampe LA angelegt wird. Im Normalbetriebszustand, d.h. nach erfolgter Zündung der Lampe LA wird diese somit mit einer Festfrequenz betrieben. Alternativ dazu besteht die Möglichkeit, die Frequenz periodisch um einen vorgegeben Mittelwert zu modulieren, da hierdurch die Grenzwerte für die Oberwellen leichter eingehalten werden können.

Die Funktionsweise des Hochsetzstellers ist im Prinzip bereits bekannt und soll daher im folgenden lediglich kurz zusammengefaßt werden. Ist der Feldeffekttransistor S3 leitend, steigt der Strom in der Induktivität L1 linear an. Sperrt hingegen der Feldeffekttransistor S3, entlädt sich der Strom in den Speicherkondensator C1, so daß an diesem eine aus einer Gleichspannung mit Welligkeit bestehende Zwischenkreisspannung Vz entsteht. Durch ein gezieltes Ansteuern des Feldeffekttransistors S3 kann die Energieaufnahme des Aufwärtswandlers und damit auch die an dem Speicherkondensator C1 anliegende Zwischenkreisspannung Vz beeinflußt werden. Dabei besteht die Möglichkeit, die Energieaufnahme durch eine Veränderung der Einschaltzeit oder des Tastverhältnisses des Schalters S3 zu variieren.

Bisher war es üblich, einem Regler den an dem Speicherkondensator C1 anliegenden Spannungswert Vz der Zwischenkreisspannung als Istwert zuzuführen. Darüber hinaus wurde als fester Sollwert eine Referenzspannung vorgegeben und anhand eines Vergleichs zwischen Sollwert und Istwert ein Stellwert erzeugt, durch den die Einschaltzeit des Schalters des Hochsetzstellers bestimmt wurde. Die Regelung erfolgte derart, daß ein gewünschter vorgegebener Wert für die Zwischenkreisspannung erzielt wurde.

Gemäß der vorliegenden Erfindung wird jedoch dem Zwischenkreisspannungs-Regler 1 nunmehr neben dem Wert der Zwischenkreisspannung Vz über die Eingangsleitung 7 auch ein - im dargestellten Beispiel dem Lastkreis 3 entnommener - Betriebsparameter über die Eingangsleitung 6 zugeführt. Dieser Parameter gibt Auskunft über die der Lampe LA zugeführte Leistung, wobei es sich beispielsweise um die Lampenspannung oder den Lampenstrom handeln kann. Der Feldeffekttransistor S3 wird nunmehr von dem Zwischenkreisspannungs-Regler 1 derart angesteuert, daß nicht mehr eine bestimmte Zwischenkreisspannung Vz erzeugt wird, sondern daß die der Lampe LA zugeführte Leistung innerhalb eines vorgegebenen Leistungsfensters liegt. Hierdurch wird durch eine einfache Maßnahme sichergestellt, daß trotz möglicherweise auftretender Bauteiltoleranzen der einzelnen Elemente des Vorschaltgeräts die Lampe LA mit der gewünschten Leistung betrieben wird, ohne daß zuvor eine aufwendige Messung und ein Abgleich des Vorschaltgeräts stattfinden muß.

Alternativ zu dem in Fig. 1 dargestellten Ausführungsbeispiel kann der Abgriff der Eingangsleitung 6 für den Betriebsparameter auch an dem Mittelpunkt P der Halbbrücke oder an einem Emitterwiderstand der Halbbrücke erfolgen. Auch in diesen Fällen können Meßwerte gewonnen werden, die Auskunft über die der Lampe LA zugeführte Leistung geben und daher zum Regeln der Zwischenkreisspannung Vz geeignet sind.

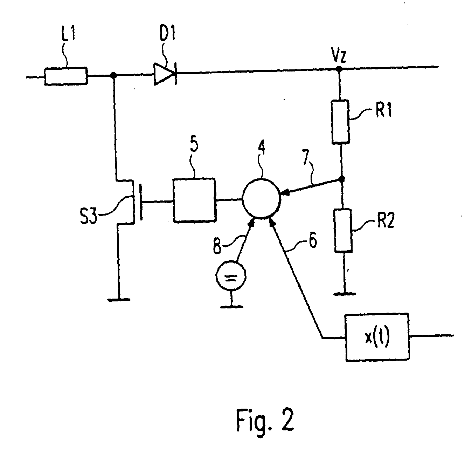

Die nähere Ausgestaltung des vorzugsweise digital ausgeführten Zwischenkreisspannungs-Reglers 1 ist in Figur 2 dargestellt. Zentrales Element ist dabei eine Recheneinheit 4, welche die ihr zugeführten Meßwerte und Parameter in entsprechende Signale umsetzt. Dabei wird der Recheneinheit 4 zunächst über eine Eingangsleitung 8 als Basiswert ein Referenzspannungswert zugeführt, der Auskunft über die erwünschte Ausgangsleistung gibt. Ferner wird der Recheneinheit 4 über die Eingangsleitung 7 die mit Hilfe eines aus zwei Widerständen R1 und R2 bestehenden Spannungsteilers abgegriffene Zwischenkreisspannung Vz zugeführt. Schließlich erhält die Recheneinheit 4 als drittes Eingangssignal die über die Eingangsleitung 6 herangeführte Information über den aktuellen Leistungswert x(t), mit dem die Lampe augenblicklich betrieben wird.

Die drei Eingangswerte werden von der Recheneinheit 4 zu einem Signalwert verarbeitet, der einem Steuerblock 5 zum Ansteuern des Feldeffekttransistors S3 zugeführt wird. Abhängig von dem Signalwert erzeugt der Steuerblock 5 ein Steuersignal, durch welches der Feldeffekttransistor S3 gesperrt bzw. durchgeschaltet wird. Durch die gezielte Ansteuerung des Schalters S3 kann die Leistungsaufnahme des Vorschaltgeräts und damit die von dem Hochsetzsteller bereitgestellte Zwischenkreisspannung Vz verändert werden, was insgesamt in einer Regelung der der Lampe zugeführten Ausgangsleistung resultiert. Dabei wird der Umstand ausgenützt, daß die Ausgangsleistung ein monotones Verhalten im Vergleich zur Zwischenkreisspannung Vz zeigt, d.h., daß mit ansteigender Zwischenkreisspannung Vz auch eine höhere Ausgangsleistung erzielt wird und umgekehrt. Auf diese Weise besteht die Möglichkeit, nur mit geringen zusätzlich technischen Maßnahmen die Lampe unter den gewünschten Leistungsbedingungen zu betreiben.

Es ist anzumerken, daß anstelle des hier dargestellten Hochsetzstellers auch andere Glättungsschaltungen verwendet werden können, deren Leistungsaufnahme beeinflußt werden kann. Hierfür bietet sich beispielsweise auch ein Tiefsetzsteller oder eine vergleichbare Schaltung an. Dabei ist es insbesondere vorteilhaft, wenn die Leistungsaufnahme durch einen Schalter beeinflußt werden kann, da hierdurch in einfacher Weise die Möglichkeit gegeben ist, die Lampenleistung auf den gewünschten Wert einzustellen.

Das erfindungsgemäße Vorschaltgerät stellt somit ein äußerst kostengünstig herzustellendes Gerät dar, welches trotz möglicher Bauteiltoleranzen dennoch einen Lampenbetrieb innerhalb eines bestimmten Leistungsfensters sicherstellt.

## Patentansprüche

1. Abgleichsverfahren für ein nicht-dimmbares elektronisches Vorschaltgerät, wobei das Vorschaltgerät eine Glättungsschaltung zum Erzeugen einer Zwischenkreisspannung (Vz) und einen nachgeschalteten Wechselrichter (S1, S2) mit einem Festfrequenzoszillator (2) aufweist, und wobei die Glättungsschaltung einen Zwischenkreisspannungs-Regler (1) beinhaltet, aufweisend folgende Schritte:
a) Erfassung eines Betriebsparameters, der der Ausgangsleistung des Vorschaltgeräts entspricht, durch den Zwischenkreisspannungs-Regler (1),
b) Regelung der Zwischenkreisspannung (Vz) in Abhängigkeit von dem Betriebsparameter auf ein vorgegebenes Leistungsfenster.

2. Abgleichsverfahren nach Anspruch 1,
**dadurch gekennzeichnet,**
**dass** der Wechselrichter (S1, S2) in dem Normalbetriebszustand eine Wechselspannung mit einer Frequenz erzeugt, die um einen Mittelwert herum periodisch moduliert ist.

3. Abgleichsverfahren nach Anspruch 1 oder 2,
**dadurch gekennzeichnet,**
**dass** die Glättungsschaltung ein die Energieaufnahme des Vorschaltgeräts steuerndes Schaltelement aufweist und der Zwischenkreisspannungs-Regler (1) in Schritt b) das Schaltelement ansteuert.

4. Abgleichsverfahren nach einem der Ansprüche 1 bis 3,
**dadurch gekennzeichnet,**
**dass** der Betriebsparameter die Lampenspannung ist.

5. Abgleichsverfahren nach einem der Ansprüche 1 bis 3,
**dadurch gekennzeichnet,**
**dass** der Betriebsparameter der Lampenstrom ist.

6. Abgleichsverfahren nach einem der Ansprüche 1 bis 5,
**dadurch gekennzeichnet,**
**dass** dem Zwischenkreisspannungs-Regler (1) weiterhin die Zwischenkreisspannung zugeführt wird und der Zwischenkreisspannungs-Regler (1) die Zwischenkreisspannung bei der Regelung berücksichtigt.

7. Elektronisches Vorschaltgerät für mindestens eine Gasentladungslampe (LA), mit einer an eine Wechselspannungsquelle anschließbaren Gleichrichterschaltung, einer an den Ausgang der Gleichrichterschaltung angeschlossen Glättungsschaltung zum Erzeugen einer Zwischenkreisspannung (Vz), sowie einem mit der Zwischenkreisspannung (Vz) gespeisten Wechselrichter (S1, S2), an dessen Ausgang ein die Lampe (LA) enthaltender Lastkreis (3) angeschlossen ist,
wobei die Glättungsschaltung einen Zwischenkreisspannungs-Regler (1) aufweist, welcher einen Betriebsparameter erfaßt, der der Ausgangsleistung des Vorschaltgeräts entspricht,
**dadurch gekennzeichnet,**
**dass** der Wechselrichter (S1, S2) einen Festfrequenzoszillator (2) aufweist, und
der Zwischenkreisspannungs-Regler (1) einen Eingang (6) für den Betriebsparameter, einen Eingang (7) für die gleichzeitige Erfassung eines Werts, der die Zwischenkreisspannung wiedergibt, sowie einen weiteren Eingang (8) für einen Referenz-Spannungswert aufweist, der die Soll-Ausgangsleistung wiedergibt, und
der Zwischenkreisspannungs-Regler (1) ein Ausgangssignal erzeugt, das die Zwischenkreisspannung (Vz) derart verändert, dass im Normalbetriebszustand die Ausgangsleistung des Vorschaltgeräts innerhalb eines Soll-Leistungsfensters liegt.

8. Elektronisches Vorschaltgerät nach Anspruch 7,
**dadurch gekennzeichnet,**
**dass** es sich bei der Frequenz einer von dem Wechselrichter (S1, S2) erzeugten und an den Lastkreis (3) mit der Lampe (LA) angelegten Wechselspannung in dem Normalbetriebszustand um eine um einen vorgegebenen Mittelwert periodisch modulierte Frequenz handelt.

9. Elektronisches Vorschaltgerät nach Anspruch 7 oder 8,
**dadurch gekennzeichnet,**
**dass** die Glättungsschaltung ein die Energieaufnahme des Vorschaltgeräts steuerndes Schaltelement (S3) aufweist, welches von dem Zwischenkreisspannungs-Regler (1) angesteuert wird.

10. Elektronisches Vorschaltgerät nach Anspruch 9,
**dadurch gekennzeichnet,**
**dass** das Schaltelement ein Feldeffekttransistor (S3) ist.

11. Elektronisches Vorschaltgerät nach einem der Ansprüche 7 bis 10,
**dadurch gekennzeichnet,**
**dass** die Glättungsschaltung ein Hochsetzsteller ist.

12. Elektronisches Vorschaltgerät nach einem der Ansprüche 7 bis 11,
**dadurch gekennzeichnet,**
**dass** der von dem Zwischenkreisspannungs-Regler (1) erfaßte Betriebsparameter die Lampenspannung ist.

13. Elektronisches Vorschaltgerät nach einem der Ansprüche 7 bis 12,
**dadurch gekennzeichnet,**
**dass** der von dem Zwischenkreisspannungs-Regler (1) erfaßte Betriebsparameter der Lampenstrom ist.

## Claims

1. Calibration method for a non-dimmable electronic ballast, the ballast having a smoothing circuit for generating an intermediate circuit voltage (V_{z}) and a downstream inverter (S1, S2) having a fixed frequency oscillator (2), and the smoothing circuit containing an intermediate circuit voltage regulator (1), having the following steps:-
a) detection of an operating parameter, which corresponds to the output power of the ballast, by means of the intermediate circuit voltage regulator (1),
b) regulating the intermediate circuit voltage (V_{z}), in dependence upon the operating parameter, to a predetermined power window.

2. Calibration method according to claim 1,
**characterised in that**,
in the normal operating state the inverter (S1, S2) generates an a.c. voltage with a frequency which is periodically modulated around a mean value.

3. Calibration method according to claim 1 or 2,
**characterised in that**,
the smoothing circuit has a switch element controlling the energy take-up of the ballast and in step b) the intermediate circuit voltage regulator (1) controls the switch element.

4. Calibration method according any of claims 1 to 3,
**characterised in that**,
the operating parameter is the lamp voltage.

5. Calibration method according any of claims 1 to 3,
**characterised in that**,
the operating parameter is the lamp current.

6. Calibration method according any of claims 1 to 5,
**characterised in that**,
the intermediate circuit voltage continues to be delivered to the intermediate circuit. voltage regulator (1) and the intermediate circuit voltage regulator (1) takes the intermediate circuit voltage into account in the regulation.

7. Electronic ballast for at least one gas discharge lamp (LA), having a rectifier circuit connectable to an a.c. voltage source, a smoothing circuit, for the generation of an intermediate circuit voltage (V_{z}), connected to the output of the rectifier circuit, and an inverter (S1, S2) fed with the intermediate circuit voltage (V_{z}), to the output of which inverter there is connected a load circuit (3) containing the lamp (LA), the smoothing circuit having an intermediate circuit voltage regulator (1) which detects an operating parameter that corresponds to the output power of the ballast,
**characterised in that**,
the inverter (S1, S2) has a fixed frequency oscillator (2), and the intermediate circuit voltage regulator (1) has an input (6) for the operating parameter, an input (7) for the simultaneous detection of a value which represents the intermediate circuit voltage, and a further input (8) for a reference voltage value which represents the desired output power, and the intermediate circuit voltage regulator (1) generates an output signal that so changes the intermediate circuit voltage (V_{z}) that in the normal operating state the output power of the ballast lies within a desired power window.

8. Electronic ballast according to claim 7,
**characterised in that**,
the frequency of an a.c. voltage generated by the inverter (S1, S2) and applied to the load circuit (3) having the lamp (LA) is in the normal operating state a frequency periodically modulated around a predetermined mean value.

9. Electronic ballast according to claim 7 or 8,
**characterised in that**,
the smoothing circuit has a switch element (S3) controlling the energy take-up of the ballast, which switch element is controlled by the intermediate circuit voltage regulator (1).

10. Electronic ballast according to claim 9,
**characterised in that**,
the switch element is a field effect transistor (S3)

11. Electronic ballast according to any of claims 7 to 10,
**characterised in that**,
the smoothing circuit is a boost converter.

12. Electronic ballast according to any of claims 7 to 11,
**characterised in that**,
the operating parameter detected by the intermediate circuit voltage regulator (1) is the lamp voltage.

13. Electronic ballast according to any of claims 7 to 12,
**characterised in that**,
the operating parameter detected by the intermediate circuit voltage regulator (1) is the lamp current.

## Revendications

1. Procédé d'étalonnage d'un ballast électronique non réglable en intensité, le ballast comportant un circuit de lissage, destiné à générer une tension de circuit intermédiaire (Vz), et un onduleur (S1, S2) monté en aval et comportant un oscillateur (2) de fréquence fixe, et le circuit de lissage contenant un régulateur de tension de circuit intermédiaire (1), ledit procédé comportant les étapes suivantes consistant à :
a) détecter au moyen du régulateur de tension de circuit intermédiaire (1) un paramètre de fonctionnement qui correspond à la puissance de sortie du ballast,
b) réguler la tension de circuit intermédiaire (Vz) en fonction du paramètre de fonctionnement sur une fenêtre de puissance prédéterminée.

2. Procédé d'étalonnage selon la revendication 1, **caractérisé en ce que** l'onduleur (S1, S2) génère en fonctionnement normal une tension alternative présentant une fréquence qui est modulée périodiquement autour d'une valeur moyenne.

3. Procédé d'étalonnage selon la revendication 1 ou 2, **caractérisé en ce que** le circuit de lissage comporte un élément de commutation commandant l'absorption d'énergie du ballast et **en ce que** le régulateur de tension de circuit intermédiaire (1) commande l'élément de commutation à l'étape b).

4. Procédé d'étalonnage selon l'une des revendications 1 à 3, **caractérisé en ce que** le paramètre de fonctionnement est la tension d'une lampe.

5. Procédé d'étalonnage selon l'une des revendications 1 à 3, **caractérisé en ce que** le paramètre de fonctionnement est le courant d'une lampe.

6. Procédé d'étalonnage selon l'une des revendications 1 à 5, **caractérisé en ce que** la tension de circuit intermédiaire est en outre amenée au régulateur de tension de circuit intermédiaire (1) et **en ce que** le régulateur de tension de circuit intermédiaire (1) tient compte de la tension de circuit intermédiaire dans la régulation.

7. Ballast électronique pour au moins une lampe à décharge gazeuse (LA), comportant
un circuit redresseur pouvant être raccordé à une source de tension alternative,
un circuit de lissage raccordé à la sortie du circuit redresseur et destiné à générer une tension de circuit intermédiaire (Vz),
ainsi qu'un onduleur (S1, S2) qui est alimenté avec la tension de circuit intermédiaire (Vz) et dont la sortie est raccordée à un circuit de charge (3) contenant la lampe (LA),
le circuit de lissage comportant un régulateur de tension de circuit intermédiaire (1) qui détecte un paramètre de fonctionnement qui correspond à la puissance de sortie du ballast,
**caractérisé en ce que**
l'onduleur (S1, S2) comporte un oscillateur (2) de fréquence fixe,
le régulateur de tension de circuit intermédiaire (1) comporte
- une entrée (6) destinée au paramètre de fonctionnement,
- une entrée (7) destinée à la détection simultanée d'une valeur qui exprime la tension de circuit intermédiaire,
- ainsi qu'une autre entrée (8) destinée à une valeur de tension de référence qui exprime la puissance de sortie théorique,
et le régulateur de tension de circuit intermédiaire (1) génère un signal de sortie qui modifie la tension de circuit intermédiaire (Vz) de telle sorte que, en fonctionnement normal, la puissance de sortie du ballast se trouve à l'intérieur d'une fenêtre de puissance théorique.

8. Ballast électronique selon la revendication 7, **caractérisé en ce que** la fréquence d'une tension alternative, générée par l'onduleur (S1, S2) et appliquée au circuit de charge (3) doté de la lampe (LA), est en fonctionnement normal une fréquence modulée périodiquement autour d'une valeur moyenne prédéterminée.

9. Ballast électronique selon la revendication 7 ou 8, **caractérisé en ce que** le circuit de lissage comporte un élément de commutation (S3) qui commande l'absorption d'énergie du ballast et qui est commandé par le régulateur de tension de circuit intermédiaire (1).

10. Ballast électronique selon la revendication 9, **caractérisé en ce que** l'élément de commutation est un transistor à effet de champ (S3).

11. Ballast électronique selon l'une des revendications 7 à 10, **caractérisé en ce que** le circuit de lissage est un survolteur.

12. Ballast électronique selon l'une des revendications 7 à 11, **caractérisé en ce que** le paramètre de fonctionnement détecté par le régulateur de tension de circuit intermédiaire (1) est la tension de la lampe.

13. Ballast électronique selon l'une des revendications 7 à 12, **caractérisé en ce que** le paramètre de fonctionnement détecté par le régulateur de tension de circuit intermédiaire (1) est le courant de la lampe.
